## Europäisches Patentamt

## European Patent Office

## Office européen des brevets

(11) Veröffentlichungsnummer: **0 067 901**
**B1**

(12) # EUROPÄISCHE PATENTSCHRIFT

(45) Veröffentlichungstag der Patentschrift:
11.09.85

(51) Int. Cl.⁴: **C 10 B 53/00, C 10 L 5/46**

(21) Anmeldenummer: 81104927.9

(22) Anmeldetag: 25.06.81

(54) Verfahren zur Herstellung von festen, lagerbaren und geruchsneutralen Brennstoffen aus Abfällen.

(43) Veröffentlichungstag der Anmeldung:
29.12.82 Patentblatt 82/52

(45) Bekanntmachung des Hinweises auf die Patenterteilung:
11.09.85 Patentblatt 85/37

(84) Benannte Vertragsstaaten:
AT BE CH DE FR GB IT LI NL SE

(56) Entgegenhaltungen:
DE - A - 2 950 324
FR - A - 1 538 500
GB - A - 301 427
GB - A - 1 286 532
US - A - 3 862 887
US - A - 4 038 152

(73) Patentinhaber: **Deutsche Kommunal-Anlagen Miete GmbH, Candidplatz 9-11, D-8000 München 90 (DE)**

(72) Erfinder: **Hillekamp, Klaus, Dr., Musäusstrasse 3, D-8000 München 60 (DE)**
Erfinder: **Berghoff, Rolf, Dr., Lötterfelderstrasse 17, D-4006 Büderich (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft ein Verfahren zur Herstellung von festen, lagerbaren und geruchsneutralen Brennstoffen aus zellulosehaltigen Abfällen, bei dem die Abfälle thermisch behandelt werden.

Die Beseitigung von Abfällen, insbesondere von Hausmüll und hausmüllartigem Müll, stellt wegen der wachsenden Bevölkerungszunahme und der Erschöpfung der Deponien ein immer dringenderes Problem dar. Man hat daher mehrfach versucht, die Abfälle aufzubereiten, um ihre Bestandteile sinnvoll weiterzuverwenden.

Ein Verfahren zur Behandlung organischer Abfallmaterialien und das dabei erhaltene Produkt sind in der DE-OS 2 513 767 beschrieben. Dieses Verfahren führt jedoch zu einer hohen Umweltbelastung bei dem Verfeuern der erzeugten Brennstoffe.

Des weiteren sind verschiedene Verfahren bekannt, bei denen Abfallstoffe einer Pyrolyse unterzogen werden, wobei insbesondere auf die Gaserzeugung und die Erzeugung von Pyrolyseölen und Teeren ein besonderes Augenmerk gerichtet ist. Ein Beispiel für ein derartiges Pyrolyseverfahren ist in der US-PS 4 038 152 beschrieben.

Dieses Verfahren betrifft die Entgasung von Abfällen unter Erzeugung eines kohlenstoffhaltigen Rückstandes, von Ölen und Gasen. Hierzu werden die Abfälle ohne Unterschiede bis auf eine Temperatur von 540° C erhitzt. Das entstehende Schwelgas wird abgekühlt und das anfallende Öl gewonnen. Es kann zur weiteren Verbesserung noch einer Crackeinheit zugeführt werden, um Aromaten, Diesel, Öl und Kerosin herzustellen. Das verbleibende Gas kann schließlich auch noch unter Erzeugung von Erdgas hydriert werden. Aus dem Rückstand selbst wird kohlenstoffhaltiges Material gewonnen.

Kennzeichnend für dieses Verfahren ist, daß die Abfälle auf 540° C erhitzt werden, auf eine Temperatur, bei der eine vollständige Entgasung erfolgt.

Die GB 301 427 betrifft die thermische Behandlung von städtischem Abfall durch Entgasung. Zur Verringerung der zu behandelnden Menge wird der anfallende Abfall getrocknet, gesiebt — Abtrennung von Feinteilen —, vom Eisen befreit und hinsichtlich Wertstoffe sortiert. Der verbleibende Rest wird bei 350—400° C in einen kohlenstoffhaltigen Rückstand, kondensierbare und nicht kondensierbare Gase zerlegt. Hierzu wird das entstehende Schwelgas abgekühlt und die anfallenden kondensierbaren Stoffe gewonnen. Nach der Reinigung kann das verbleibende Gas zur Beheizung des Ofens eingesetzt werden. Das entstehende Gas reicht jedoch nicht zur Beheizung des Ofens aus. Zusätzliche Energie liefert der kohlenstoffhaltige Rückstand oder es muß Fremdenergie bezogen werden. Der Rückstand selbst wird gewaschen und gesiebt und schließlich zu Briketts verarbeitet.

Demgegenüber liegt der vorliegenden Erfindung die Aufgabe zugrunde, ein Verfahren zu schaffen, welches die Herstellung von festen, lagerbaren und geruchsneutralen Brennstoffen aus zellulosehaltigen Abfällen ermöglicht, die ohne hohe Umweltbelastung verfeuerbar sind und eine gute Ausbeute bezüglich des in den Abfällen enthaltenen Energiegehaltes ermöglichen.

Diese Aufgabe wird erfindungsgemäß dadurch gelöst, daß man die zellulosehaltigen Abfälle, deren organischer Anteil im Mittel über 50 Gew.-% Zellulose oder Zellulosederivate enthält, insbesondere Hausmüll und/oder hausmüllartigen Gewerbemüll, und deren Feuchtigkeitsgehalt nicht über 40 Gew.-% liegt, über eine Zeitdauer von 30 bis 120 Minuten in einem indirekt beheizten Durchlaufofen entgast und die Abfälle dabei auf mindestens 250° C, maximal auf 500° C, erhitzt, wobei die Temperatur in diesem Bereich in Abhängigkeit von der Zusammensetzung und dem Feuchtigkeitsgehalt der Abfallstoffe derart gewählt wird, daß der Energieinhalt des entstehenden Pyrolysegases für die Beheizung des Durchlaufofens gerade ausreicht, und das entstehende Pyrolysegas bei und nach seinem Austritt aus dem Durchlaufofen bis zu seiner Verbrennung auf einer Temperatur gehalten wird, die ein Auskondensieren flüchtiger Produkte verhindert.

Aufgrund der niedrigen Temperatur, auf welche die Abfälle maximal erhitzt werden, wird erreicht, daß im festen Rückstand des Pyrolyseverfahrens, der den festen Brennstoff liefert, ein bezogen auf den Gesamtenergieinhalt der zum Einsatz kommenden Abfallstoffe relativ hoher Gesamtenergieinhalt erreicht wird. Wenn die Pyrolysetemperatur, d. h. die Temperatur, auf welche die Abfälle maximal erhitzt werden, gemäß einer bevorzugten Ausgestaltung zwischen 250° C und 480° C liegt, läuft das Verfahren in einem Bereich ab, bei dem der zur Durchführung der Pyrolyse notwendige Energieaufwand gering ist. Wenn diese Temperatur gemäß einer besonders bevorzugten Ausgestaltung zwischen 300° C und etwa 450° C liegt, verläuft die Pyrolyse in einem Bereich, bei dem die Zersetzungswärme ihr Maximum erreicht, während die Verkokungswärme auf ein Minimum absinkt. Dies bedeutet, daß bei diesen Temperaturen die Pyrolyse mit minimalen Energieaufwand durchzuführen ist.

Wenn die Pyrolyse in herkömmlichen Durchlauföfen, insbesondere in sog. Drehrohröfen durchgeführt wird, reicht bei den angegebenen Verfahrensbedingungen eine Zeitdauer für den Durchlauf der Abfälle von 30 bis 120 Minuten in der Regel aus, um die Abfallstoffe soweit zu entgasen, daß die erwünschte Versprödung eintritt, welche es unnötig macht, spezielle chemische Versprödungsmittel einzusetzen oder energieaufwendige Vor- oder Nachzerkleinerungen vorzunehmen.

Durch das erfindungsgemäße Verfahren wird ein fester Brennstoff erhalten, der nicht nur aufgrund seiner Geruchsneutralität lagerbar und gut transportierbar ist, sondern der darüber hinaus aufgrund seiner weitgehenden Wasserfreiheit besonders vorteilhaft verbrannt werden kann, da die bei Temperaturen über 800°C ablaufenden Hydrolysereaktionen der in ihm enthaltenen Alkali- und Erdalkalichloride nicht zum Tragen kommen. Es entsteht somit bei der Verbrennung der erfindungsgemäßen festen Brennstoffe ein nahezu chlorwasserstofffreies Abgas, das keiner zusätzlichen Rauchgaswäsche bedarf. Dieser Vorteil wirkt sich besonders bei einer gemeinsamen Verbrennung von Kohle und dem erfindungsgemäß hergestellten festen Brennstoff aus, da Kohle ebenfalls keinen sehr geringen Wassergehalt aufweist, so daß die Erdalkali- und Alkalihalogenide in der Achse verbleiben.

Als besonders günstig hat es sich erwiesen, wenn das entstehende Pyrolysegas zur Beheizung des Durchlaufofens zumindest anteilig verwendet wird. Zweckmäßigerweise wird hierbei die Temperatur, welcher die Abfälle entgast werden, in Abhängigkeit von der Zusammensetzung und dem Feuchtigkeitsgehalt der Abfallstoffe derart gewählt, daß der Energieinhalt des entstehenden Pyrolysegases für die Beheizung des Durchlaufofens gerade ausreicht. Dies bedeutet, daß im Pyrolysevorgang nur soviel Gas mit einem ausreichenden Energieinhalt erzeugt wird, als für den autarken Fortgang des gesamten Pyrolyseprozesses erforderlich ist. Auf diese Art und Weise erreicht man, daß für die Aufbereitung des Abfalls weder Fremdenergie zur Aufrechterhaltung des Pyrolysevorganges benötigt wird, noch daß energetisch schlecht zu verwertendes Überschußgas oder Schwelöl anfällt.

Aus Gründen einer einfachen Fahr- und Betriebsweise der Pyrolyseanlage empfiehlt es sich jedoch bisweilen, im geringen Maße einen Überschuß an Pyrolysegas zu erzeugen, um auf schwankende Energieansprüche des Pyrolysepozesses reagieren zu können, wie sie durch unterschiedliche Feuchtigkeitsgehalte und einen unterschiedlichen Schwelenergiebedarf der verschiedenen Abfälle entstehen. Das überschüssige Pyrolysegas kann hierbei wie das für die Beheizung des Pyrolysereaktors benötigte Gas verbrannt werden. Die fühlbare Wärme aus der Verbrennung des Überschußgases und des erforderlichen Heizgases kann zur Vorwärmung der Verbrennungsluft benutzt werden.

Grundsätzlich ist es jedoch auch möglich, kurzzeitig auftretende erhöhte Energieanforderungen des Pyrolysevorganges mit Fremdenergie abzudecken. In diesem Fall stellt das Pyrolysegas die Energiegrundlast zur Verfügung und die Fremdenergie lediglich die Energiespitzen.

Die Wahl der Pyrolysetemperatur wird, wie vorstehend erwähnt, durch die im Schwelgas erforderliche Energiemenge beeinflußt. Ist die für die Aufrechterhaltung des Pyrolyseprozesses erforderliche Energiemenge klein, was beispielsweise bei der Entgasung von trockenem Müll der Fall ist, dann kann die Pyrolysetemperatur niedrig gewählt werden. Umgekehrt bedürfen Stoffe mit hohem Pyrolyseenergiebedarf einer höheren Energiezufuhr, die dem Schwelgas durch erhöhte Pyrolysetemperatur vermittelt wird.

Als besonders günstig hat es sich erwiesen, wenn die Pyrolysegase bei Temperaturen oberhalb 800°C, vorzugsweise oberhalb 1000°C verbrannt werden. Dieses Vorgehen garantiert eine völlige Zerstörung geruchsbildender Substanzen, d. h. es führt zu einer vollständigen Desodorierung der entstehenden Rauchgase, wobei gleichzeitig die in dem Pyrolysegas entstehenden chlorierten aromatischen Verbindungen, z. B. chlorierte Dioxine, chlorierte Biphenyle und dergleichen, und auch die kondensierten aromatischen Verbindungen restlos oxidativ abgebaut und unschädlich gemacht werden. Dies ist ein erheblicher Vorteil des erfindungsgemäßen Verfahrens gegenüber der klassischen Hausmüllverbrennung auf Rosten.

Falls die Pyrolysegase — mit Ausnahme einer Entstaubung — vor ihrer Verbrennung keine zusätzliche Reinigung erfahren, wird zweckmäßigerweise aus den Rauchgasen Chlorwasserstoff, Fluorwasserstoff, Schwefelwasserstoff und $SO_2$ abgeschieden, was trocken oder mittels einer Rauchgaswäsche erfolgen kann. Es ist jedoch vorzuziehen, wenn man aus den heißen Pyrolysegasen vor deren Verbrennung Chlorwasserstoff, Fluorwasserstoff und Schwefelwasserstoff sowie $SO_2$ trocken abscheidet, was gemäß bekannten Techniken erfolgen kann, wobei in der Regel eine Staubabscheidung einhergeht. Die trockene Abscheidung der genannten Schadstoffe hat den Vorteil, daß diese bei höheren Temperaturen durchführbar ist, bei denen der Taupunkt der am niedrigst siedenden Komponenten des Schwelgases noch nicht unterschritten wird, so daß ein Auskondensieren flüchtiger organischer Bestandteile wirksam vermieden wird, welche zu einer erheblichen Abwasserbelastung führen könnten. Damit dieser Vorteil ganz zum Tragen kommt, empfiehlt es sich, das enstehende Pyrolysegas bei und nach seinem Austritt aus dem Durchlaufofen bis zu seiner Verbrennung auf einer Temperatur zu halten, die ein derartiges Auskondensieren flüchtiger Produkte verhindert. Die untere Grenze für diese Temperatur liegt bei den nach dem erfindungsgemäßen Verfahren zu verarbeitenden Abfällen in der Regel bei 200°C.

Da bei der Durchführung des erfindungsgemäßen Verfahrens Chlorwasserstoff, Fluorwasserstoff, Schwefelwasserstoff und $SO_2$ aus den Abfällen in das Pyrolysegas übertreten, aus denen sie, wie vorstehend erwähnt, einfach und ohne große Umweltbelastung abscheidbar sind, vermindert sich hierdurch automatisch der Chlor-, Fluor- und Schwefelgehalt der als feste Brennstoffe zu verwendenden festen Austragsstoffe aus dem Durchlaufofen. Der nach dem erfindungsgemäßen Verfahren anfallende Brennstoff hat daher einen niedrigeren Gehalt an Chloriden, Fluoriden und Schwefelverbindungen als Brennstoffe aus Hausmüll, wie sie ohne die pyrolytische Zersetzung erzeugt werden.

Das entstehende Pyrolysegas wird vorzugsweise im Gegenstrom zu den Abfällen aus dem Durchlaufofen abgezogen. Indem das Pyrolysegas den Durchlaufofen entgegen der Durchlaufrichtung für die Abfälle durchströmt, unterstützt es die Trocknung der zunächst feucht in den Durchlaufofen eintretenden Abfälle. Des weiteren ist es bei dieser Verfahrensführung nicht nötig, daß der entstehende Wasserdampf bis auf die im Durchlaufofen herrschende Maximaltemperatur erhitzt wird.

Andererseits kann das entstehende Pyrolysegas im Gleichstrom zu den Abfällen aus dem Durchlaufofen abgezogen werden. Dieses Vorgehen hat den Vorteil, daß zusätzliche Crackungen der gasförmigen Produkte im Innern des Durchlaufofens entstehen, was zu einem zusätzlichen Kohlenstoffausfall führt und damit zu einer Heizwertanreicherung der festen Austragstoffe. Im übrigen vermeidet diese Verfahrensführung die Gefahr, daß sich die Schwelgase vor oder nach ihrem Austreten aus dem Durchlaufofen vorzeitig unter den Kondensationspunkt der in dem Schwelgas enthaltenen hochsiedenden Komponenten abkühlen, so daß es zu einem unerwünschten Ausfallen von wäßrigen und/oder öligen bzw. teerhaltigen Kondensaten kommt, welche die Anlage verstopfen können.

Als zweckmäßig hat es sich ferner erwiesen, wenn nach Abtrennung der Metalle und/oder schweren Inertstoffen aus den aus dem Durchlaufofen austretenden Feststoffen, die festen Brennstoffe in zumindest zwei Fraktionen unterschiedlicher Teilchengröße aufgetrennt werden.

Dies kann beispielsweise mittels einer Vermahlungs- und/oder Siebstufe erfolgen. Die Siebstufe bietet dabei die Möglichkeit einer Abtrennung von Feinstaub aus Kohlenstoff, welcher aufgrund seiner großen Oberfläche einen erhöhten Gehalt an Schwermetallen und Chloriden, Fluoriden und Schwefelverbindungen aufweist. Die Abtrennung des Feinstaubes führt somit zu einer Reduzierung des Schadstoffgehaltes im Brennstoff selbst. Sie wird erleichtert, wenn während der Entgasung Calciumverbindungen, wie Kalkhydrat und Kalk, vorhanden sind, die ein Agglomerieren der Feinstteile bewirken, welche sich dann noch leichter von den gröberen Teilen trennen lassen.

Eine bevorzugte Ausführungsform des Verfahrens besteht darin, daß die Fraktionen mit einer Teilchengröße über 0,3 mm als erwünschte Handelsform des festen Brennstoffs verwendet oder zu dieser verarbeitet werden.

Die Fraktionen mit einer Teilchengröße über 0,3 mm werden als erwünschte Handelsform des festen Brennstoffs verwendet oder zu dieser weiterverarbeitet, was beispielsweise durch ein Verpressen zu Briketts erfolgen kann.

Die aus dem Durchlaufofen austretenden Feststoffe, Metalle und/oder schweren Inertstoffe, die bei der Pyrolyse in dem angewandten Niedertemperaturbereich nicht weiter verändert werden, wie beispielsweise Fe, Cu, Al etc., sowie Glas, Steine und Asche werden mit Vorteil durch eine Inertstoffabscheidung abgetrennt, was zu einer Heizwerterhöhung des gebildeten festen Brennstoffs führt, der dann im wesentlichen nur aus kohlenstoffhaltigem Material besteht. Das Ausscheiden ist besonders problemlos, da durch die Pyrolysebehandlung der Abfall nach seinem Austritt aus dem Durchlaufofen wasserfrei, trocken und leicht hantierbar vorliegt.

Zum Einsatz in Kraftwerken mit Einblasfeuerung wird nach dem Abscheiden der Metalle und der anderen Inertstoffanteile eine Zerkleinerung in einem Mahlkreislauf durchgeführt, die den Brennstoff in eine mit normalen Staubfeuerungen verfeuerbare Feinheit bringt. Auf diese Weise kann der erzeugte feste Brennstoff besonders vorteilhaft in bestehenden konventionellen Großkraftwerken verbrannt werden, und es braucht nicht auf die wirkungsgradmäßig schlechteren Rostfeuerungen alter Kraftwerke bzw. Müllverbrennungsanlagen zurückgegriffen werden.

Es ist allerdings auch möglich, den entgasten Abfall in der Zementindustrie ohne weitere Behandlung einzusetzen. Die Eisen- und Inertstoffanteile stellen in diesem Fall sogar verwertbare Komponenten dar.

Gemäß einer weiteren günstigen Ausgestaltung des Verfahrens werden die Abfälle vor ihrer Zuführung in den Durchlaufofen einer schonenden Grobzerkleinerung oder Siebung zur Abscheidung von Feingut unterzogen.

Dieses Vorgehen bezweckt zum einen, daß eine versehentliche Verstopfung des Einlasses zu dem Durchlaufofen verhindert wird, zum anderen, daß Inertstoffanteile, wie beispielsweise Glas, nicht zu sehr zerkleinert werden. Die Siebung zur Abscheidung von Feingut bewirkt eine Heizwerterhöhung der in den Durchlaufofen eingeführten Abfälle, da hierdurch Ascheanteile ausgeschieden werden.

Zur Leistungssteigerung der Anlage und um die Gefahr zu bannen, daß es zu Kondensationen im Reaktor, d. h. im Durchlaufofen kommt, empfiehlt es sich, die Abfälle vor ihrer Zuführung zu dem Durchlaufofen vorzutrocknen und dabei einen Feuchtigkeitsgehalt einzustellen, der vorzugsweise zwischen 5 Gew.-% und 15 Gew.-% Wasser liegt.

Vergleicht man das erfindungsgemäße Verfahren mit den bisher angewandten Techniken, so werden die damit erzielten Vorteile besonders deutlich ersichtlich.

Gegenüber dem BRAM-Verfahren müssen die zu verarbeitenden Abfälle gar nicht oder nur gering vorbehandelt werden. So entfallen insbesondere die energieintensive und materialverschleißende Feinzerkleinerung und die energieintensive Vortrocknung.

Erhebliche Vorteile ergeben sich auch im Vergleich zur herkömmlichen Pyrolyse von Abfällen. Diese zielt auf die Gewinnung von Gasen oder Ölen ab, wobei als zum Teil lästiges Nebenprodukt ein kohlenstoffhaltiger Rückstand von gewissem Heizwert anfällt. Erhebliche Probleme bereitet bei diesem Verfahren jedoch die Reinigung der Gase und Öle von den anorganischen und wasserlöslichen organischen Substanzen. Diese schwerwiegenden Probleme entfallen bei der Anwendung des erfindungsgemäßen Verfahrens, da hier nur so viel Schwelgas erzeugt wird, als dies zur Aufrechterhaltung des Pyrolysevorganges erforderlich ist. Diese geringe Menge kann ohne besonderen technischen Aufwand trocken von den sauren Bestandteilen Chlorwasserstoff, Fluorwasserstoff, Schwefelwasserstoff und $SO_2$ befreit werden.

Außerdem fällt bei dem erfindungsgemäßen Pyrolyseverfahren Energie in speicherbarer Form an, was bei den technisch in der Erprobung befindlichen Hausmüll-Pyrolyseverfahren nicht der Fall ist, die auf eine unmittelbare Nutzung des Hauptproduktes Pyrolysegas ausgelegt sind. Da somit beim erfindungsgemäßen Verfahren keine unmittelbare Nutzung des Hauptproduktes erforderlich ist, entfällt hier auch die Notwendigkeit, den Pyrolyseteil der Anlage mit einem Wärmeteil oder Wärmekraftteil zu kombinieren. Diese Kopplung von Pyrolyseteil und Energieverwertungsteil macht die üblichen Pyrolyseverfahren teuer und störanfällig.

Bei Anwendung des erfindungsgemäßen Verfahrens für die Pyrolyse von normalem Hausmüll, ergibt sich ein Ausbringen von festem Rückstand mit im Mittel 45 Gew.-% bis 60 Gew.-% und ein Ausbringen von Gas von im Mittel 35 Gew.-% bis 55 Gew.-%, jeweils bezogen auf die eingesetzten Abfallstoffe. Ein Ausbringen von festem Brennstoff von im Mittel 55 Gew.-% bei normalem Hausmüll ist ein bisher unerreicht hohes Ausbringen, das die besondere Wirtschaftlichkeit des Verfahrens mitbegründet.

Die Erfindung wird im folgenden anhand eines schematisierten Verfahrensstammbaums näher erläutert, aus dem weitere vorteilhafte Einzelheiten entnehmbar sind. Die in der Technik bereits bekannten Einzelvorrichtungen, wie Drehrohrofen, Vorrichtungen zur Trockenreinigung etc., sind in dem Verfahrensstammbaum als beschriftete Blöcke wiedergegeben.

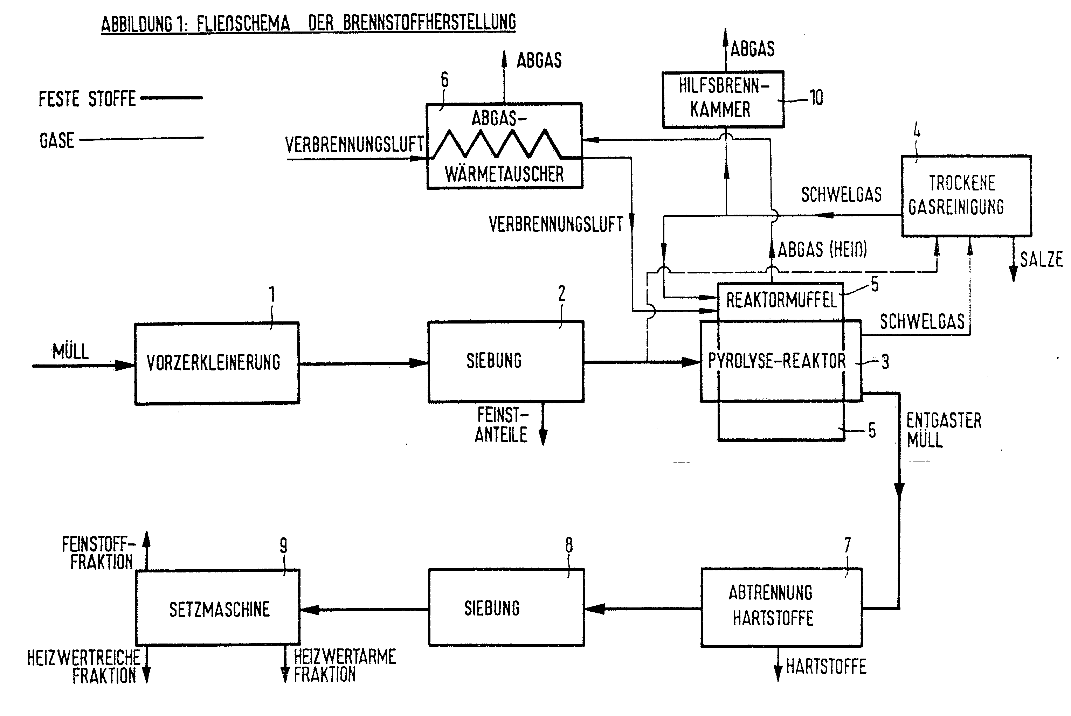

Der angelieferte Hausmüll gelangt nach Abb. 1 zunächst in eine Vorzerkleinerungseinrichtung 1, z. B. eine Ketten-Hammermühle oder ein Walzenschneidgerät, welche eine gute Auflockerung der verschiedenen Müllbestandteile bewirken und die sperrigen Anteile zerkleinern, während die restlichen Komponenten nach Möglichkeit nicht zerkleinert werden. Es handelt sich somit um eine schonende Vorzerkleinerung.

Aus der Vorzerkleinerungseinrichtung 1 gelangt der vorzerkleinerte Abfall in eine Siebung 2 zur Abtrennung von Rohmüll-Feinanteilen, wie Asche, Sand, feine Vegetabilien und dergleichen. Geeignet sind Siebtrommeln und/oder Spannwellensiebe mit einer Maschenweite von 10 mm bis 30 mm. Anstelle einer Vorzerkleinerung mit zusätzlicher Siebung ist es auch möglich, die Behandlung in einer Siebtrommel mit Einbauten durchzuführen. Die Einbauten im Einzugsteil brechen dann die sperrigen Teile, während die Einbauten in der Siebtrommel die Müllgebinde aufreißen. Die Vorabsiebung erhöht den Heizwert des entgasten Abfalls durch Entfernung des Inertanteils. Der auf diese Weise vorbehandelte Hausmüll gelangt nunmehr in den außenbeheizten Pyrolysereaktor 3, der im dargestellten Beispiel ein außenbeheiztes Drehrohr sein sollte. Dort werden die Abfälle unter Luftabschluß auf mindestens 250°C und höchstens 500°C, vorzugsweise jedoch auf 250°C bis 480°C, bevorzugt 300°C bis 450°C, erhitzt und dabei pyrolytisch zersetzt. Die dabei entstehenden flüchtigen Produkte werden aus der Pyrolysevorrichtung abgezogen, was wie strichliert dargestellt, im Gegenstrom oder, wie durchgezogen dargestellt, im Gleichstrom zu der Durchlaufrichtung der Abfälle durch das Drehrohr erfolgen kann. Anschließend werden sie der Vorrichtung 4 zur trockenen Abscheidung von HCl, HF, $H_2S$ und $SO_2$ zugeführt.

Aus HCl, HF, $H_2S$ und $SO_2$ entstehen bei der Trockenreinigung Salze. Diese können deponiert oder einer weiteren Verwendung zugeführt werden.

Aus der Vorrichtung 4 zur trockenen Abscheidung von Schadstoffen gelangt das gereinigte Pyrolysegas in eine Reaktormuffel 5, wo es zusammen mit vorgewärmter Verbrennungsluft, die in einem Abgaswärmetauscher 6 vorgewärmt wurde, bei Temperaturen über 800°C verbrannt wird. Durch geeignete Isolierung der Rohrleitungen, welche von dem Pyrolysereaktor 3 zu der Vorrichtung 4 und von dort zu der Reaktormuffel 5 bzw. zu einer Hilfsbrennkammer 10 führen, wird erreicht, daß die Pyrolysegase über eine Temperatur gehalten werden, die ein Auskondensieren der flüchtigen Produkte verhindert. Zuviel erzeugtes Schwelgas kann in der Hilfsbrennkammer 10 verbrannt werden.

Nach dem Verlassen der Reaktormuffel 5 gelangt das Abgas in den Abgaswärmetauscher 6. Mit einer Abgastemperatur von ca. 300°C verläßt es diesen Wärmetauscher und kann aufgrund der Trockengasreinigung des Rohgases ohne weitere Nachbehandlung in die Atmosphäre entlassen werden.

Der Rückstand wird gasdicht ausgetragen. Die Abdichtung erfolgt über den Rückstand selbst.

Da der Rückstand aufgrund der pyrolitischen Behandlung und des Trockenaustrages in loser Schüttung vorliegt, können die gröberen Hartstoffe, wie Eisen, Glas, Steine, NE-Metalle, Drahtgeflecht und dergleichen, durch eine Vorrichtung 7 zur Sichtung bzw. zur Absiebung auf einfache Weise abgetrennt werden. Die weitere Abtrennung kann zur Gewinnung von Wertstoffen magnetisch und unter Ausnutzung der unterschiedlichen speziellen Gewichte erfolgen.

Ist die Verwendung des festen Brennstoffs in der Zementherstellung vorgesehen, so kann auf den Vorbehandlungsschritt Absiebung des Rohmüll-Feingutes und auf die Nachbehandlung des entgasten Abfalls verzichtet werden, da die Inertkomponenten im Zementherstellungsprozeß nicht stören sondern sogar, wie z. B. Eisen, erwünschte Komponenten darstellen.

Um den Heizwert des Brennstoffs weiter zu erhöhen, werden die noch vorhandenen Inertstoffe durch Siebung 8 mit nachgeschalteter Sortierung über eine Setzmaschine in eine heizwertreiche und in eine heizwertarme Fraktion zerlegt. Gleichzeitig wird bei diesem Vorgang eine Feinstoff-Fraktion abgetrennt, die aufgrund ihrer spezifisch hohen Oberfläche und der beim Kohlenstoff dadurch gegebenen Absorptionseigenschaften mit Schwermetallen und Chloriden angereichert ist. Die Abtrennung des Feinstoffanteils hat zur Folge, daß die Brennstoff-Fraktion an diesen Schadstoffen geringer belastet ist. Der erzeugte Brennstoff hat einen Heizwert $H_u$ von 3500 bis 4500 kcal/kg. Die Ausbeute an Brennstoff, bezogen pro Tonne durchschnittlichen Hausmülls, beträgt 250 bis 300 kg.

**Patentansprüche**

1. Verfahren zur Herstellung von festen, lagerbaren und geruchsneutralen Brennstoffen aus zellulosehaltigen Abfällen, bei dem Abfälle thermisch behandelt werden, dadurch gekennzeichnet, daß man die zellulosehaltigen Abfälle, deren organischer Anteil im Mittel über 50 Gew.-% Zellulose oder Zellulosederivate enthält, insbesondere Hausmüll und/oder hausmüllartigen Gewerbemüll, und deren Feuchligkeitsgehalt nicht über 40 Gew.-% liegt, über eine Zeitdauer von 30 bis 120 Minuten in einem indirekt beheizten Durchlaufofen entgast und die Abfälle dabei auf mindestens 250°C, maximal auf 500°C, erhitzt, wobei die Temperatur in diesem Bereich in Abhängigkeit von der Zusammensetzung und dem Feuchtigkeitsgehalt der Abfallstoffe derart gewählt wird, daß der Energieinhalt des entstehenden Pyrolysegases für die Beheizung des Durchlaufofens gerade ausreicht, und das entstehende Pyrolysegas bei und nach seinem Austritt aus dem Durchlaufofen bis zu seiner Verbrennung auf einer Temperatur gehalten wird, die ein Auskondensieren flüchtiger Produkte verhindert.

2. Verfahren nach Anspruch 1, dadurch gekennzeichnet, daß man die Abfälle auf eine maximale Temperatur erhitzt, die zwischen 250°C und 480°C, vorzugsweise zwischen 300°C und 450°C, liegt.

3. Verfahren nach einem der vorstehenden Ansprüche, dadurch gekennzeichnet, daß das entstehende Pyrolysegas zur Beheizung des Durchlaufofens zumindest anteilig verwendet wird.

4. Verfahren nach den vorstehenden Ansprüchen, dadurch gekennzeichnet, daß nach Abtrennung der Metalle und/oder schweren Inertstoffen aus den aus dem Durchlaufofen austretenden Feststoffen die festen Brennstoffe in zumindest zwei Fraktionen unterschiedlicher Teilchengröße aufgetrennt werden.

5. Verfahren nach Anspruch 4, dadurch gekennzeichnet, daß die Fraktionen mit einer Teilchengröße über 0,3 mm als erwünschte Handelsform des festen Brennstoffs verwendet oder zu dieser verarbeitet werden.

6. Verfahren nach einem der vorstehenden Ansprüche, dadurch gekennzeichnet, daß die Abfälle von ihrer Zuführung in den Durchlaufofen einer schonenden Grobzerkleinerung und Siebung zur Abscheidung von Feingut unterzogen werden.

**Claims**

1. Procedure for the production of solid, storable and odourless fuel from cellulosic waste material, with which waste material is treated thermally characterized in that, the cellulosic waste material which on the average has an organic content of more than 50% by weight cellulose or cellulose derivatives, especially domestic refuse and/or a combination of industrial and home refuse, and which has a dampness content less than or equal to 40% by weight, are degassed for a period of 30 to 120 minutes in an indirectly heated continuous furnace, whereby the waste material is heated to a minimum temperature of 250°C, and to a maximum temperature of 500°C, whereby the temperature in this field is chosen according to the composition and the dampness content of the waste material, so that the energy content of the produced pyrolysis gas is just sufficient for the heating of the continuous furnace, and that during and after its exit from the continuous furnace the pyrolysis gas produced is kept until its combustion at a temperature which prevents the condensation of volatile products.

2. Procedure according to claim 1, characterized in that, the waste material is heated to a maximum temperature between 250°C and 480°C, preferably between 300°C and 450°C.

3. Procedure according to any preceding claim, characterized in that, the continuous furnace is heated at least proportinately by the produced pyrolysis gas.

4. Procedure according to any preceding claim, characterized in that, after the separation of the metals and/or the heavy inert material from the solid material exiting from the continuous furnace the solid fuel is separated at least into two fractions of different particle size.

5. Procedure according to claim 4, characterized in that, the fractions with a particle size of more than 0,3 mm are used as the desired commercial form of the solid fuel or processed into this form.

6. Procedure according to any preceding claim, characterized in that before the waste material is led into the continuous furnace it is carefully and roughly disintegrated and screened in order to separate it from the fine material.

**Revendications**

1. Procédé pour la production de combustibles stockable, neutres aux odeurs et solides par des déchets contenant de la cellulose, lors duquel des déchets sont traités thermiquement caractérisé en ce que l'on dégaze les déchets contenant de la cellulose dont la quote-part organique contient en moyenne plus de 50% en poids de cellulose ou des dérivés de cellulose, en particulier les déchets domestiques et/ou des déchets industriels semblables aux domestiques, et dont le contenu en humidité n'excèder pas 40% en poids, pour une période de 30 à 120 minutes dans un four continu chauffé tout en chauffant les déchets à 250°C au minimum et à 500°C au maximum, la température de cette fourchette étant choisie en dépendance de la composition et de la teneur en humidité de ces éléments de déchets de manière à ce que la teneur en énergie du gaz de pyrolyse qui se dégage est tout juste suffisant pour chauffer le four continu et que le gaz de pyrolyse en émanant est maintenu, en passant par le four continu et après en avoir sorti jusqu'à sa combustion, à une température qui évite la condensation de produits volatils.

2. Procédé selon revendication 1, caractérisé en ce que l'on chauffe les déchets à une température maximum se situant entre 250°C et 480°C, de préférence entre 300°C et 450°C.

3. Procédé selon une des revendications sus-citées, caractérisé en ce que le gaz de pyrolyse se produisant est utilisé, au moins en partie, pour chauffer le four continu.

4. Procédé selon les revendications sus-citées, caractérisé en ce qu'après la séparation des métaux et/ou des éléments inertes lourds des materiaux solides sortant du four continu, les combustibles solides sont partagés en deux fractions au moins ayant une différente grandeur de la particule élementaire.

5. Procédé selon revendication 4, caractérisé en ce que les fractions ayant une grandeur de la particule élémentaire supérieur à 0,3 mm sont utilisés comme forme commerciale souhaitée du combustible solide ou en sont converties.

6. Procédé selon une des revendications sus-citées, caractérisé en ce que les déchets sont soumis à un gros broyage soigneux ou à un criblage avant d'être amenés dans le four continu pour en séparer les microparticules.

ABBILDUNG 1: FLIEßSCHEMA DER BRENNSTOFFHERSTELLUNG

FESTE STOFFE ——

GASE ——

ABGAS

6

ABGAS-
WÄRMETAUSCHER

VERBRENNUNGSLUFT

ABGAS

HILFSBRENN-
KAMMER — 10

VERBRENNUNGSLUFT

SCHWELGAS

4

TROCKENE
GASREINIGUNG

ABGAS (HEIß)

SALZE

REAKTORMUFFEL — 5

SCHWELGAS

1

MÜLL VORZERKLEINERUNG

2

SIEBUNG

PYROLYSE-REAKTOR — 3

5

ENTGASTER
MÜLL

FEINST-
ANTEILE

FEINSTOFF-
FRAKTION

9

SETZMASCHINE

8

SIEBUNG

7

ABTRENNUNG
HARTSTOFFE

HEIZWERTREICHE
FRAKTION

HEIZWERTARME
FRAKTION

HARTSTOFFE